# EUROPÄISCHE PATENTSCHRIFT

(11) **EP 1 262 949 B1**
(45) Veröffentlichungstag und Bekanntmachung des Hinweises auf die Patenterteilung: **07.04.2004**
(21) Anmeldenummer: 02011360.1
(22) Anmeldetag: 23.05.2002
(51) Int. Cl.: G09G 3/36

(54) **Grossflächige Anzeigevorrichtung mit reduzierter Störstrahlung**
Large area display device with reduced radio interference
Affichage de grande surface à rayonnement parasite réduit

(30) Priorität: 25.05.2001 DE 20108797 U
(43) Veröffentlichungstag der Anmeldung: 04.12.2002
(73) Patentinhaber: AEG Gesellschaft für moderne Informationssysteme mbH, 89077 Ulm (DE)
(72) Erfinder: Bayrle, Reiner, Dr., 89129 Langenau (DE); Bader, Otto, 88447 Warthausen (DE); Borst, Wolfgang, 89264 Weissenhorn (DE)
(74) Vertreter: Winter, Brandl, Fürniss, Hübner, Röss, Kaiser, Polte Partnerschaft

(56) Entgegenhaltungen:
- EP-A- 0 402 295
- EP-A- 0 604 719
- EP-A- 0 731 436
- DE-A- 3 633 708
- DE-A- 19 653 288
- DE-A- 19 950 839
- US-A- 5 293 437
- US-A- 5 394 165
- PATENT ABSTRACTS OF JAPAN vol. 016, no. 139 (P-1334), 8. April 1992 (1992-04-08) & JP 03 296796 A (TOSHIBA CORP), 27. Dezember 1991 (1991-12-27)

## Beschreibung

Die Erfindung betrifft eine großflächige Anzeigevorrichtung nach dem Oberbegriff des Anspruchs 1, die zur Anzeige von sich verändernden Information z.B. an Häuserfasaden geeignet ist.

DE 4244584 A1 offenbart ein Verfahren und eine Anordnung zur Vernetzung von elektro-optischen Bildwandmodulen einer großflächigen Bildwand. Hierbei ist eine Lichtleitfaser vorgesehen, die die von einer Sendeeinrichtung ausgehende optische Strahlung auf eine Empfangseinrichtung richtet, wobei die aus Sendeeinrichtung, Empfangseinrichtung und Lichtleitfaser gebildete Übertragungsstrecke der Übertragung von Steuerdaten zum Steuern der Bildwandmodule der Bildwand dient. Diese Lichtleitfaser verbindet entweder zwei Bildwandmodule miteinander oder eine "Einrichtung zur Dateneinspeisung" mit einer "Einrichtung zur Zeileneinkopplung". Darüber hinaus grenzen die einzelnen, die Bildwand aufbauenden Bildwandmodule aneinander, so dass von der Lichtleitfaser nur der Spalt überbrückt zu werden braucht, der von zwei nebeneinanderliegenden Bildwandmodulen bzw. von der Einrichtung zur Dateneinspeisung zur Einrichtung der Zeileneinkopplung begrenzt wird. Dieser Spalt ist sehr eng, da ansonsten die aus den einzelnen Bildwandmodulen aufgebaute Bildwand kein modulübergreifendes Bild darstellen könnte. Entsprechend kurz sind dieverwendeten Lichtleitfasern, so dass das Problem der Störstrahlung gar nicht auftritt.

DE 19710855 A1 zeigt eine Leuchtdiodenmatrix-Anzeigevorrichtung bzw. ein Anzeigemodul mit in Zeilen und Spalten angeordneten Anzeigepunkten, die mittels einer Steuereinrichtung ansteuerbar sind, wobei eine großflächige Anzeigevorrichtung aus mehreren solcher Anzeigemodulen zusammengesetzt sein kann. Die Anzeigevorrichtung weist darüber hinaus eine Überwachungseinrichtung zur Erfassung von Anzeigefehlern auf, die mittels Optokopplern die entsprechenden Signale übertragen kann.

DE 19950839 A1 zeigt eine Vorrichtung zur Ansteuerung der Anzeigelemente eines Anzeigelementarrays, wobei die Anzeigeelemente in Zeilen und Spalten angeordnet sind. Jedes einer Mehrzahl von Unterarrays des Anzeigeelementarrays wird über eine separate Steuerschaltung angesteuert wird. Die Steuerschaltungen sind jeweils über herkömmliche Ansteuerungsleitungen mit einem Unterarry verbunden. Eine Busverbindung verbindet die Steuerschaltungen untereinander sowie mit einer übergeordneten Steuereinrichtung. Der Grundgedanke in der DE 19950839 A1 besteht darin, jeweilige Treiberchips, d.h. Steuerschaltungen, jeweiligen Anzeigeunterarrays, die auch als Anzeigematrizen bezeichnet werden können, zuzuordnen. Die Ansteuerung der Anzeigeelemente umfasst Spaltenleitungen und Zeilenleitungen, wobei die Spaltenleitungen beispielsweise als metallische Leitungen ausgebildet sein können, währen die Zeilenleitungen beispielsweise aus Indiumzinnoxid ausgebilet sein können.

DE 19653288 A1 offenbart eine Vorrichtung zur Ansteuerung einer Mehrzahl von LCDs in einer großflächigen Anzeigeeinrichtung. Um die Störstrahlung zu minimieren, wird vorgeschlagen, die Ansteuerungssignale zu den LCDs als Differenzsignale auszuführen und/oder im Zeitmultiplexverfahren zu übertragen.

Aus DE 3633708 A1, DE 19654440 A1, DE 3837313 A1 und DE 4203276 A1 sind weitere großflächige LED- oder LCD-Anzeigevorrichtungen bekannt.

Aus der DE 29607786 U1 ist eine großflächige LCD-Anzeigevorrichtung bekannt, bei der sich verändernde Informationen auf einer Mehrzahl von ein gemeinsames Anzeigefeld bildenden LCD-Anzeigemodulen angezeigt werden. Durch die Verwendung von LCD-Anzeigemodulen wird erreicht, daß das Anzeigefeld bei Nicht-Ansteuerung z. B. durchscheinend bzw. durchsichtig ist. Zur Ansteuerung der einzelnen Anzeigemodule müssen zu jedem Anzeigemodul entsprechende Signal- bzw. Ansteuerleitungen geführt werden. Dies führt unweigerlich dazu, daß im Randbereich der LCD-Anzeigemodule optische dunkle Bereiche bzw. Ränder vorgesehen werden müssen, "hinter" denen die Signalleitungen geführt werden. Bei großflächigen Anzeigevorrichtungen und Verwendung von metallischen Signalleitungen tritt hierbei eine unerwünschte Antennenwirkung der Zuleitungen auf, d.h. derartige Anzeigevorrichtungen stören elektronische Geräte in ihrer Umgebung, was eine aufwendige Abschirmung der Zuleitungen nötig macht.

Es ist daher Aufgabe der vorliegenden Erfindung, großflächige Anzeigevorrichtungen so auszugestalten, daß mit vertretbarem Aufwand die von der Anzeigevorrichtung ausgehende Störstrahlung auf ein Minimum reduziert wird.

Die Lösung dieser Aufgabe erfolgt durch die Merkmale des Anspruchs 1.

Durch die Verwendung von Lichtwellenleitern zwischen Hauptsteuereinrichtung und Untersteuereinrichtungen und durch die Verwendung von herkömmlichen metallischen Leitern von den Untersteuereinrichtungen zu den einzelnen Anzeigemodulen, d.h. durch einen "Leitermix", wird zum einen erreicht, daß sehr lange Kupferzuleitungen von der Hauptsteuereinrichtung zu den Untersteuereinrichtungen vermieden werden und somit die Antennenwirkung reduziert wird. Gleichzeitig kann durch das Beibehalten der Metallleiter von den Untersteuereinrichtungen zu den einzelnen Anzeigemodulen bzw. Modul-Treibereinrichtungen dennoch auf herkömmliche ausgereifte Technologie zurückgegriffen werden. Darüber hinaus wird durch die erfindungsgemäße Aufteilung in Lichtwellenleiter und herkömmliche metallische Leiter die Anzahl der Koppel- bzw. Umsetzelemente von optischen in herkömmliche elektrische Signale auf ein erträgliches Maß reduziert.

Grundsätzlich ist die Verwendung von Lichtwellenleitern bei solchen Anzeigevorrichtungen problematisch, da aufgrund des beschränkten für die Leitungsführung zur Verfügung stehenden Raumes kleine Biegeradien auftreten können. Biegeradien kleiner 5 cm müssen bei Lichtwellenleitern jedoch vermieden werden, da sonst unerwünschte Rückreflexionen und Beschädigungen auftreten können. Durch den Leitermix bestehend aus Lichtwellenleitern und herkömmlichen Metallleitungen können die Lichtwellenleiter nahezu gerade geführt werden, und dort wo der Knick auftritt, kann ein Umsetzelement zum Umwandeln der optischen Signale in elektrische Signale und umgekehrt vorgesehen werden. Damit wird die Einhaltung des kritischen Biegeradius bei Lichtwellenleitern ohne Probleme möglich.

Zusätzlich wird durch die Verwendung von Lichtwellenleitern zwischen Hauptsteuereinrichtung und Untersteuereinrichtungen der Verzicht auf aufwendige Datensicherungs-Verfahren bei der Signalübertragung bzw. Ansteuerung möglich. Folglich wird die Datenübertragungsrate wesentlich erhöht bzw. bei reduzierter Baudrate kann die gleiche Nutzdatenmenge übertragen werden. Dieser reduzierte Verwaltungsaufwand bei der Datenübertragung ist auf die höhere Sicherheit der Datenübertragung bei Lichtwellenleitern im Vergleich zu herkömmlichen Kupferleitern zurückzuführen.

Umsetzelement zur Umwandlung von optischen Signalen in elektrische und wieder zurück sind sehr teuer. Durch den erfindungsgemäßen Leitermix wird die Anzahl der notwendigen Umsetzelement auf ein wirtschaftlich vertretbares Maß reduziert.

Gemäß einer vorteilhaften Ausgestaltung der Erfindung nach Anspruch 2 erfolgt die Ansteuerung der einzelnen Untersteuereinrichtungen von der Hauptsteuereinrichtung aus seriell. Hierdurch wird die Zahl der notwendigen Lichtwellenleiter verringert, was aufgrund der beengten Raumverhältnisse vorteilhaft ist.

Gemäß einer weiteren vorteilhaften Ausgestaltung der Erfindung nach Anspruch 3 erfolgt die Ansteuerung der einzelnen Anzeigemodule von der jeweiligen Untersteuereinrichtung aus ebenfalls seriell. Auch hierdurch wird die Zahl der notwendigen Zuleitungen verringert.

Gemäß einer weiteren vorteilhaften Ausgestaltung der Erfindung nach Anspruch 4 sind einige der Untersteuereinrichtungen als Farbsteuereinrichtungen ausgebildet, die Farbmodule ansteuern. Die Farbmodule sind einzelne Anzeigemodule oder Teile davon. Eine beispielhafte Ausgestaltung solcher Farbmodule ist aus dem deutschen Gebrauchsmuster DE 20020165.4 U1 bekannt.

Gemäß einer weiteren vorteilhaften Ausgestaltung der Erfindung nach Anspruch 5 sind die Anzeigemodule in einer Matrix-Anordnung mit Zeilen und Spalten angeordnet. Hierdurch können verschieden große Anzeigevorrichtungen auf einfache Weise zusammengesetzt werden.

Gemäß einer weiteren vorteilhaften Ausgestaltung der Erfindung nach Anspruch 6 sind die Modul-Treibereinrichtungen der einzelnen Anzeigemodule am seitlichen Rand angeordnet und jeweils zwei Anzeigemodule sind paarweise einander zugekehrt, so daß deren Modul-Treibereinrichtungen an den beiden gegenüberliegenden Außenlängsseiten zu liegen kommen. Durch diese Anordnung wird die optisch aktive Fläche vergrößert. Details hierzu sind aus der deutschen Patentanmeldung DE 10023378.3 bekannt.

Weitere Einzelheiten der Erfindung ergeben sich aus der nachfolgenden Beschreibung einer bevorzugten Ausführungsform anhand der Zeichnungen.

Es zeigt:
Fig. 1 eine schematische Darstellung einer beispielhaften Ausführungsform der Erfindung, und
Fig. 2 eine schematische Darstellung eines LCD-Anzeigemoduls gemäß der Ausführungsform nach Fig. 1.

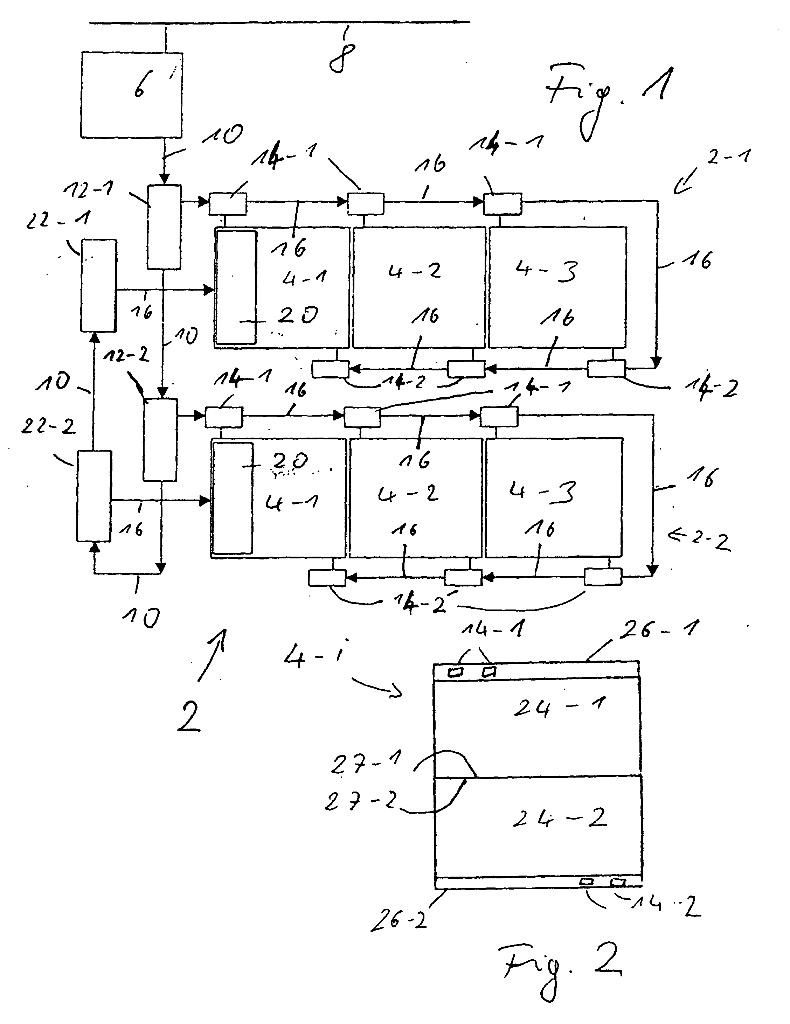

Fig. 1 zeigt schematisch eine Anzeigevorrichtung in Matrixanordnung mit einem Anzeigefeld 2, das durch eine erste Modulgruppe in Form einer ersten Anzeigezeile 2-1 und einer zweiten Modulgruppe in Form einer zweiten Anzeigezeile 2-2 gebildet wird. Jede der beiden Modulgruppen bzw. Anzeigezeilen 2-i umfaßt drei rechteckige bzw. quadratische LCD-Anzeigemodulen 4-1, 4-2 und 4-3. Die Ansteuerung der Anzeigevorrichtung erfolgt über eine Hauptsteuereinrichtung 6 der beispielsweise aus einem Ethernet LAN 8 die anzuzeigenden Informationen zugeführt werden. In der Hauptsteuereinrichtung 6 werden die Signale entsprechend aufbereitet und in optische Signale umgesetzt. Die optischen Signale werden über erste Verbindungsleiter in Form von Lichtwellenleitern 10 seriell zunächst einer ersten Untersteuereinrichtung 12-1 für die erste Zeile 2-1 und nachfolgend einer zweiten Untersteuereinrichtung 12-2 für die zweite Zeile 2-2 zugeführt.

Die Untersteuereinrichtungen 12-i umfassen nicht näher dargestellte Kopplungs- bzw. Umsetzelement, durch die die optischen Signale in elektrische Signale umgewandelt werden. Jedes der LCD-Anzeigemodule 4-i ist mit einer ersten und einer zweiten Modul-Treibereinrichtung 14-1 und 14-2 ausgerüstet. Die Verbindung zwischen der ersten Untersteuereinrichtung 12-1 und den ersten und zweiten Modul-Treibereinrichtung 14-i der ersten Anzeigezeile 2-1 erfolgt mittels zweiten Verbindungsleitern in Form von herkömmlichen Kupferleitungen 16. Die Leitungsführung ist hierbei so, daß ausgehend von der ersten Untersteuereinrichtung 12-1 zunächst seriell nacheinander die ersten Modul-Treibereinrichtungen 14-1 der drei LCD-Anzeigemodule 4-1, 4-2 und 4-3 angesteuert werden und dann die zweiten Modul-Treibeinrichtung 4-2 der drei LCD-Anzeigemodule 4-1, 4-2 und 4-3.

Ein Teil des LCD-Anzeigemodule 4-1 in der ersten und in der zweiten Modulgruppe 2-1 und 2-2 sind als Farbmodul 20 ausgebildet. Die Ausbildung einer LCD-Anzeige als Farbmodul ist auf verschiedene Weise möglich, z.B. in Form einer TFT-Anzeige, durch Farbfilter vor den jeweiligen Pixelelementen oder auch in Form einer farbigen Hinterleuchtung, wie dies bei der vorliegenden beispielhaften Ausgestaltung der Erfindung vorgesehen ist. Zur konkreten Ausgestaltung der Farbmodule 20 wird hierbei auf das deutsche Gebrauchsmuster DE 20020165.4 verwiesen. Die Ansteuerung des Farbmoduls 20 erfolgt ebenfalls über Metallleiter 16 aus einer ersten Farbsteuereinrichtung 22-1 für die erste Zeile 2-1 und aus einer zweiten Farbsteuereinrichtung 22-2 für die zweite Anzeigezeile 2-2. Die Zuführung der Signale zu den Farbsteuereinrichtungen 22-i erfolgt seriell über Lichtwellenleiter 10 ausgehend von der zweiten Untersteuereinrichtung 12-2 zu der zweiten Farbsteuereinrichtung 12-2 und weiter zu der ersten Farbsteuereinrichtung 22-1.

Fig. 2 zeigt schematisch eines der LCD-Anzeigemodule 4-i. Jedes der LCD-Anzeigemodule 4-i ist aus einer ersten Anzeigehälfte 24-1 und einer zweiten Anzeigehälfte 24-2 aufgebaut. Die beiden Anzeigehälften 24-i sind rechteckförmig und weisen jeweils eine erste Längsseite 26-1 bzw. 26-2 und eine zweite Längsseite 27-1 bzw. 27-2 auf. Auf einem Randstreifen der ersten Längsseite 26-1 der ersten Anzeigehälfte 24-1 ist die erste Modul-Treibereinrichtung 14-1 des jeweiligen LCD-Anzeigemoduls 4-i angeordnet. Auf einem Randstreifen der ersten Längsseite 26-2 der zweiten Anzeigehälfte 24-2 ist die zweite Modul-Treibereinrichtung 24-2 des jeweiligen LCD-Anzeigemoduls 4-i angeordnet. Die beiden LCD-Anzeigehälften 24-1 und 24-2 sind gleichgroß und mit ihren zweiten Längsseiten 27-1 und 27-2 auf Stoß zueinander angeordnet.

Großflächig in diesem Zusammenhang bedeutet mehrere bis zu einigen hundert Quadratmeter. Die Anzahl der Modulgruppen bzw. Anzeigezeilen und/oder die Anzahl der LCD-Anzeigemodule je Modulgruppe steigt mit der Größe der Anzeigevorrichtung.

### Bezugszeichenliste

- 2: Anzeigefeld
- 2-i: Modulgruppe, Anzeigezeilen
- 4-i: Anzeigemodule
- 6: Hauptsteuereinrichtung
- 8: Ethernet LAN
- 10: erste Verbindungsleiter, LWL
- 12-i: Untersteuereinrichtungen
- 14-i: Modul-Treibereinrichtungen
- 16: zweite Verbindungsleiter, Metallleiter

- 20: Farbmodul
- 22-i: Farbsteuereinrichtungen
- 24-i: Anzeigehälften
- 26-i: erste Längsseite von 24-i
- 27-i: zweite Längsseite von 24-i

## Patentansprüche

1. Großflächige Anzeigevorrichtung mit
mindestens einem Anzeigefeld (2), das aus einer Mehrzahl von eng benachbart angeordneten, flächig sich erstreckenden, zur Anzeige von veränderbarer Information geeigneten Anzeigemodulen, insbesondere LCD-Anzeigemodulen (4-i), gebildet ist, und
einer Ansteuereinrichtung (6, 12-i, 14-i, 22-i) mit mindestens einer Hauptsteuereinrichtung (6),
mit einer Mehrzahl von Untersteuereinrichtungen (12-i, 22-i), die jeweils einer der mindestens einen Hauptsteuereinrichtung (6) zugeordnet sind,
einer Mehrzahl von Modul-Treibereinrichtungen (14-i), die jeweils einer der Mehrzahl der Anzeigemodule (4-i) zugeordnet sind,
mit ersten Verbindungsleitern (10) zwischen Hauptsteuereinrichtung (6) und Untersteuereinrichtungen (12-i, 22-i), mit zweiten Verbindungsleitern (16) zwischen Untersteuereinrichtungen (12-i, 22-i) und Modul-Treibereinrichtungen (14-i),
wobei die Anzeigemodule (4-i) zu einer Mehrzahl von Modulgruppen (2-i) zusammengefaßt sind, denen jeweils eine der Untersteuereinrichtungen (12-i) als Gruppensteuereinrichtung (12-i) zugeordnet ist,
wobei die Hauptsteuereinrichtung (6) durch die ersten Verbindungsleiter (10) mit den einzelnen Untersteuereinrichtungen (12-i, 22-i) verbunden ist, und
wobei die Gruppensteuereinrichtung (12-i) der jeweiligen Modulgruppe (2-i) durch die zweiten Verbindungsleiter (16) mit den einzelnen Modul-Treibereinrichtungen (14-i) der jeweiligen Modulgruppe (2-i) verbunden ist,
**dadurch gekennzeichnet,**
**dass** die ersten Verbindungsleiter Lichtwellenleiter (10) und die zweiten Verbindungleiter Metallleiter (16) sind.

2. Großflächige Anzeigevorrichtung nach Anspruch 1, bei der die Hauptsteuereinrichtung (6) durch die Lichtwellenleiter (10) seriell mit den einzelnen Untersteuereinrichtungen (12-i, 22-i) verbunden ist.

3. Großflächige Anzeigevorrichtung nach Anspruch 1 oder 2, bei der die Gruppensteuereinrichtung (12-i) der jeweiligen Modulgruppe (2-i) durch die Metallleiter (16) seriell mit den einzelnen Modul-Treibereinrichtungen (14-i) der jeweiligen Modulgruppe (2-i) verbunden ist.

4. Großflächige Anzeigevorrichtung nach einem der vorhergehenden Ansprüche, bei der wenigstens einer der LCD-Anzeigemodule (4-i) ein Farbmodul (20) umfaßt, um eine farbige Anzeige zu erzeugen, und dass wenigstens eine der Untersteuereinrichtungen (12-i, 22-i) als Farbsteuereinrichtung (22-i) ausgebildet ist und mit den Metalleitern (16) mit dem Farbmodul (20) verbunden ist.

5. Großflächige Anzeigevorrichtung nach einem der vorhergehenden Ansprüche, bei der die einzelnen LCD-Anzeigemodule (4-i) rechteckförmig oder quadratisch sind und in einer Matrix mit Zeilen (2-i) und Spalten angeordnet sind.

6. Großflächige Anzeigevorrichtung nach Anspruch 5, bei der die Modul-Treibereinrichtungen (14-i) jeweils entlang gegenüberliegender Längsseiten (26-i) des LCD-Anzeigemoduls (4-i) angeordnet sind.

## Claims

1. A large-surface display device, including
at least one display panel (2) comprised of a plurality of closely adjacently arranged and planarly extending display modules which are suited for displaying variable information, in particular LCD display modules (4-i), and
driving means (6, 12-i, 14-i, 22-i) with at least one main control means (6),
with a plurality of secondary control means (12-i, 22-i) each associated to one of the at least one main control means (6),
a plurality of module driver means (14-i) each associated to one of the plurality of display modules (4-i),
with first connection conductors (10) between main control means (6) and secondary control means (12-i, 22-i),
with second connection conductors (16) between secondary control means (12-i, 22-i) and module drivers (14-i),
wherein the display modules (4-i) are combined into a plurality of module groups (2-i), to each of which one of the secondary control means (12-i) is associated as a group control means (12-i),
the main control means (6) being connected with the individual secondary control means (12-i, 22-i) by means of the first connection conductors, and
the group control means (12-i) of the respective module group (2-i) being connected with the individual module driver means (14-i) of the respective module group (2-i) by means of the second connection conductors (16),
**characterized in that**
the first connection conductors are light wave conductors (10), and the second connection conductors are metallic conductors (16).

2. A large-surface display device in accordance with claim 1, wherein the main control means (6) is connected in series with the individual secondary control means (12-i, 22-i) by means of the light wave conductors (10).

3. A large-surface display device in accordance with claim 1 or 2, wherein the group control means (12-i) of the respective module group (2-i) is connected in series with the individual module driver means (14-i) of the respective module group (2-i) by means of the metallic conductors (16).

4. A large-surface display device in accordance with one of the foregoing claims, wherein at least one of the LCD display modules (4-i) incorporates a color module (20) in order to produce a colored display, and at least one of the secondary control means (12-i, 22-i) is designed as a color control means (22-i) and is connected with the color module (20) with the aid of the metallic conductors (16).

5. A large-surface display device in accordance with one of the foregoing claims, wherein the individual LCD display modules (4-i) are rectangular or square, and are arranged in a matrix with lines (2-i) and columns.

6. A large-surface display device in accordance with claim 5, wherein the module driver means (14-i) are each positioned along opposite long sides (26-i) of the LCD display module (4-i).

## Revendications

1. Dispositif d'affichage de grande surface avec
au moins un tableau d'affichage (2) qui est formé d'une pluralité de modules d'affichage disposés étroitement les uns à côtés des autres, s'étendant en surface et conçus pour l'affichage d'informations modifiables, en particulier des modules d'affichage à cristaux liquides (LCD) (4-i), et
une installation de commande (6, 12-i, 14-i, 22-i) avec au moins une installation de commande principale (6),
avec une pluralité d'installations de sous-commandes (12-i, 22-i) qui sont chacune associée à l'une de la au moins une installation de commande principale (6),
une pluralité d'installations de gestionnaire de module (14-i) qui sont chacune associée à l'une de la pluralité des modules d'affichage (4-i),
avec des premiers conducteurs de connexion (10) entre l'installation de commande principale (6) et les installations de sous-commandes (12-i, 22-i),
avec des seconds conducteurs de connexion (16) entre les installations de sous-commandes (12-i, 22-i) et les installations de gestionnaire de module (14-i),
les modules d'affichage (4-i) étant réunis en une pluralité de groupes de modules (2-i) à chacun desquels est associé une des installations de sous-commandes (12-i) en tant qu'installation de commande de groupe (12-i),
l'installation de commande principale (6) étant reliée par les premiers conducteurs de connexion (10) aux différentes installations de sous-commandes (12-i, 22-i), et les installations de commande de groupe (12-i) de chaque groupe de module (2-i) étant reliées par les seconds conducteurs de connexion (16) aux différentes installations de gestionnaire de module (14-i) du groupe de modules respectif (2-i),
**caractérisé en ce que**,les premiers conducteurs de connexion sont des guides d'ondes lumineuses (10) et les seconds conducteurs de connexion sont des conducteurs métalliques (16).

2. Dispositif d'affichage de grande surface selon la revendication 1, dans lequel l'installation de commande principale (6) est reliée en série par les guides d'ondes lumineuses (10) aux différentes installations de sous-commandes (12-i, 22-i).

3. Dispositif d'affichage de grande surface selon la revendication 1 ou 2, dans lequel l'installation de commande de groupe (12-i) du groupe de modules respectif (2-i) est reliée en série par les conducteurs métalliques (16) aux différentes installations de gestionnaire de module (14-i) du groupe de modules respectif (2-i).

4. Dispositif d'affichage de grande surface selon l'une des revendications précédentes, dans lequel au moins un des modules d'affichage à cristaux liquides (4-i) comprend un module couleurs (20) pour produire un affichage en couleurs, et de sorte que au moins une des installations de sous-commandes (12-i, 22-i) est configurée comme une installation de commande des couleurs (22-i) et est reliée au module couleurs (20) par les conducteurs métalliques (16).

5. Dispositif d'affichage de grande surface selon l'une des revendications précédentes, dans lequel les différents modules d'affichage à cristaux liquides (4-i) sont rectangulaires ou quadratiques et sont disposés dans une matrice comportant des lignes (2-i) et des colonnes.

6. Dispositif d'affichage de grande surface selon la revendication 5, dans lequel les installations de gestionnaire de module (14-i) sont disposées respectivement le long des côtés longitudinaux opposés (26-i) du module d'affichage à cristaux liquides (4-i).
